(19) Europäisches Patentamt

European Patent Office

Office européen des brevets

(11) Veröffentlichungsnummer: **0 305 817 B1**

(12) **EUROPÄISCHE PATENTSCHRIFT**

(45) Veröffentlichungstag der Patentschrift: **25.11.92**

(21) Anmeldenummer: **88113398.7**

(22) Anmeldetag: **18.08.88**

(51) Int. Cl.5: **B01D 15/08**, G01N 30/60

(54) **Chromatographiesäulen-Kartuschensystem.**

(30) Priorität: **31.08.87 DE 3729002**

(43) Veröffentlichungstag der Anmeldung:
**08.03.89 Patentblatt 89/10**

(45) Bekanntmachung des Hinweises auf die
Patenterteilung:
**25.11.92 Patentblatt 92/48**

(84) Benannte Vertragsstaaten:
**BE CH DE FR GB IT LI NL SE**

(56) Entgegenhaltungen:
FR-A- 2 150 118
FR-A- 2 313 105
US-A- 3 855 130
US-A- 3 878 099

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Müller, Werner, Dr.
Giessener Strasse 4
W-6148 Heppenheim(DE)**
Erfinder: **Eisenbeiss, Friedhelm, Dr.
Luisenstrasse 28
W-6108 Weiterstadt(DE)**
Erfinder: **Kinkel, Jochen, Dr.
Waldhilbersheim Strasse 4
W-6531 Guldental(DE)**
Erfinder: **Kohl,Helmut
Sodener Strasse 95
W-6100 Darmstadt(DE)**

## Beschreibung

Die Erfindung betrifft ein Chromatographiesäulen-Kartuschensystem, im wesentlichen bestehend aus einem innenliegenden mit Sorbens füllbaren Präzisionsglasrohr und einem außenliegenden Schutz- und/oder Temperiermantel mit aufschraubbaren Säulenanschlußteilen.

Es sind bereits zahlreiche Säulen aus Glas fur die Chromatographie bekannt. Üblicherweise besitzen diese an beiden Enden ein Außengewinde oder eine Stützmutter mit einem Innen- oder Außengewinde, so daß mittels eines Gewindestopfens oder einer Überwurfmutter Kapillaranschlüsse zur Zu- und Abfuhr des Eluents angebracht werden können.

Nachteilig wirken sich bei diesen Glassäulen die durch entsprechende Bearbeitung erhaltenen Flansche, Gewinde oder Schliffkanten aus, da diese erfahrungsgemäß Ausgangspunkte für Rißbildungen sind. Dies führt dazu, daß diese bearbeiteten Glassäulen wenig druckstabil sind und bei Anwendung von etwas höheren Drucken, die bei der Flüssigkeitschromatographie oftmals notwendig sind, sehr schnell zu Bruch gehen.

Aus dem Stand der Technik sind weiterhin Säulenanordnungen für die Flüssigkeitschromatographie bekannt, die die oben beschriebenen Nachteile durch nachträgliche Bearbeitung eines Glasrohres vermeiden, jedoch andere schwerwiegende Nachteile aufweisen.

Die technische Lehre aus der Offenlegungsschrift DE-A-25 24 751 beinhaltet, daß der Elutionsmitteldruck durch das Elutionsmittel auf einen außen liegenden Mantel übertragen wird. Dabei wird das Elutionsmittel über zusätzliche Leitungen in den Zwischenraum zwischen Glassäule und äußeren Mantel eingeleitet. Dadurch wird die Bedienung umständlich, sobald das Elutionsmittel gewechselt wird. Außerdem werden durch Verschleppung von Elutionsmittel Gradientenelutionen schlecht reproduzierbar. Der Gegenstand der Offenlegungsschrift DE-A-22 39 842 ist die Dichtung eines Kolbens in einem Rohr mittels eines Hauptkörpers, einer verformbaren Hülse und eines dazwischen liegenden Dichtungsringes. Dabei ist der Dichtungsring von dem Frontende weit entfernt angebracht; somit entsteht ein großes Totvolumen, das für Anwendungen in der Chromatographie erhebliche Nachteile hervorruft (Zonenverbreiterung, geringe Trennleistung).

Auf der anderen Seite sind Chromatographiesäulen aus Metallrohren zwar druckstabil jedoch wenig geeignet z.B. für die Biochromatographie. Bei der Trennung von Biomolekülen, wie z.B. Proteinen, monoklonalen Antikörpern, Nucleinsäuren oder subzellulärer Einheiten, werden häufig als Laufmittel wäßrige Puffersysteme oder Salzlösungen verwendet, die dann sehr schnell die Metallrohre angreifen.

Es bestand daher die Aufgabe, eine Chromatographiesäule aus Glas zu finden, die druckstabil ist und zudem noch vorteilhafterweise nach dem Kartuschenprinzip eingesetzt werden kann und die zugleich sicher und totvolumenfrei abgedichtet ist.

Diese Aufgabe wurde durch die vorliegende Erfindung gelöst.

Gegenstand der Erfindung ist daher ein Chromatographiesäulen-Kartuschensystem mit einem innenliegenden, mit Sorbens füllbaren, druckstabilen Präzisionsglasrohr, einem außenliegenden Schutz- und/oder Temperiermantel und Zu- und Ableitungen für das Laufmittel enthaltenden, aufschraubbaren Säulenanschlußteilen, die eine auf den Schutz- und/oder Temperiermantel aufgeschraubte Buchse mit Innen- und Außengewinde und einen das Glasrohr radial abdichtenden mittels eines in das Innengewinde der Buchse eingreifenden Gewinderohres höhenverstellbaren Kolben aufweisen.

Einzelne Merkmale sind aus dem Stand der Technik bekannt, jedoch weist die erfindungsgemäße Kombination überraschende Vorteile, unter anderem ein verringertes Totvolumen, auf.

Die erfindungsgemäße Konstruktion hat den Vorteil, daß das eigentliche Chromatographierohr aus einem einfachen, starkwandigen Glaszylinder besteht, der nach der Herstellung nicht weiter bearbeitet wird. D.h., das Glasrohr besitzt keinen Flansch, kein Gewinde und auch keine Schliffkanten, die erfahrungsgemäß Ausgangspunkte für eine Rißbildung sind und die Druckinstabilität bewirken. Das unbearbeitete Glasrohr ist äußerst druckstabil, und damit wird das erfindungsgemäße Chromatographiesystem unter bestimmten Bedingungen sogar HPLC-tauglich.

Ein weiterer wichtiger Vorteil besteht darin, daß die Säule nach dem Kartuschen-Prinzip eingesetzt werden kann. D.h., benutzte Adsorbentien-Packungen können leicht und schnell mit dem gesamten Glasrohr aus dem erfindungsgemäßen Chromatographiesäulen-Kartuschensystem herausgenommen und gegen andere, mit neuem Sorbens gefüllte Rohre ausgetauscht werden.

In den Zeichnungen ist eine bevorzugte Ausführungsform des erfindungsgemäßen Chromatographiesäulen-Kartuschensystems gezeigt. Das erfindungsgemäße Prinzip kann jedoch in unterschiedlicher Weise, abgestimmt auf spezielle Anforderungen, realisiert werden.

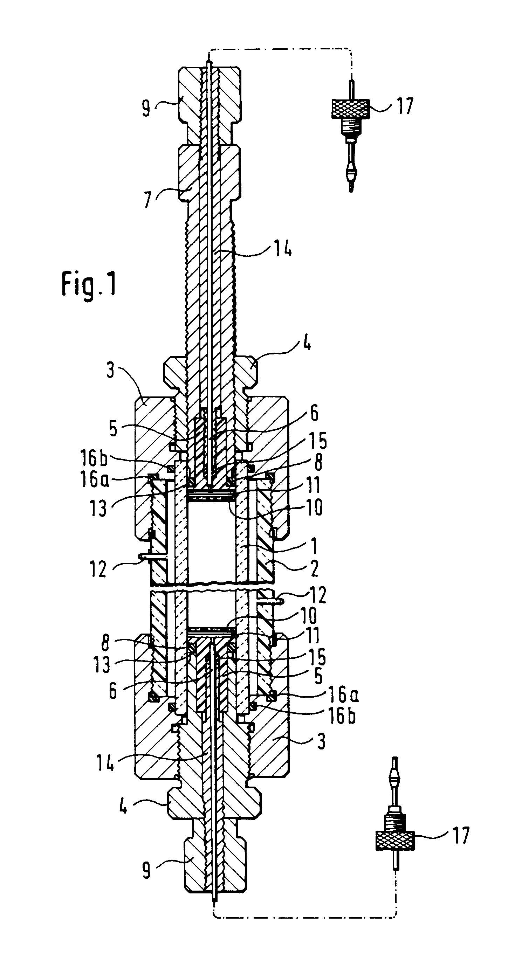

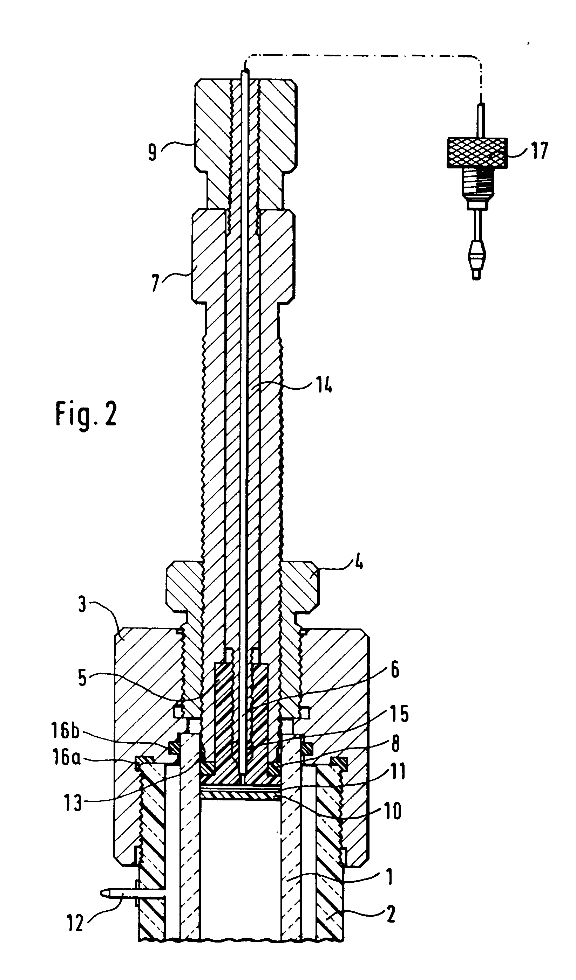

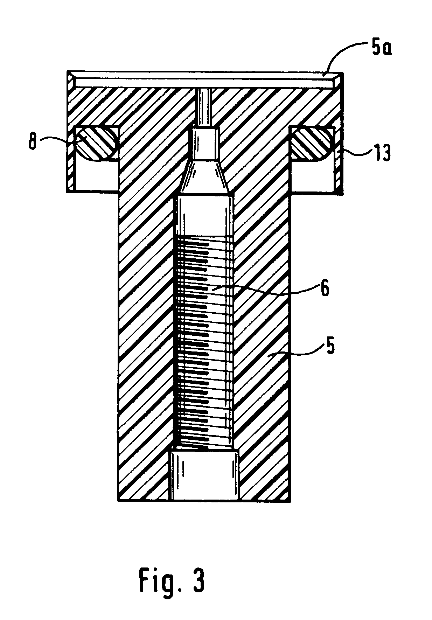

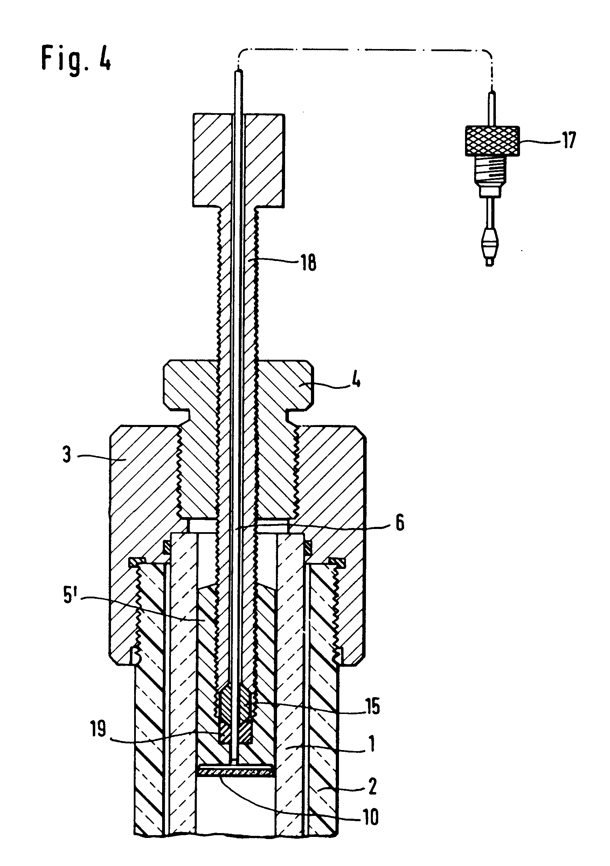

Figur 1 zeigt einen Schnitt durch das Chromatographiesäulen-Kartuschensystem mit aufgeschraubten Säulenanschlußteilen. Eine detaillierte Zeichnung eines Säulenanschlußteiles ist in Figur 2 gezeigt und Figur 3 zeigt gesondert das Kolbenstirnstück. Figur 4 zeigt eine vereinfachte Ausführungsform der Erfindung.

Das Säulenrohr aus Glas (1) wird üblicherweise mit einem Sorbens befüllt und zum Abschluß des Säulenbettes mit einer Filterplatte (10) und einem Gewebesieb (11) versehen.

Das Glasrohr kann aus den üblichen Glasmaterialien hergestellt werden wie z.B. aus Borosilikat. Die Wandstärke des Glaszylinders liegt vorzugsweise in einem Bereich von 3 mm bis 10 mm. Die Glassäulen haben Ausmaße, die für die präparative Flüssigkeitschromatographie üblich sind. Üblicherweise werden Säulen eingesetzt mit einer Länge von 10 cm bis 150 cm und einem Durchmesser von 3 mm bis 80 mm.

Das Gewebesieb, das aus den allgemein bekannten Materialien wie z.B. Polypropylen, Glasfaserfließ oder Papier besteht, gewährleistet eine perfekte Verteilung der zu trennenden Probe.

Das Glasrohr ist in einem Schutzmantel (2) gefaßt. Dieser Mantel ist vorzugsweise als Temperiermantel mit Anschlüssen für Schläuche (12) ausgelegt. Der Schutz- und/oder Temperiermantel ist vorzugsweise aus einem transparenten Material angefertigt, insbesondere bevorzugt besteht er aus Plexiglas.

Die Transparenz des Schutz- und/oder Temperiermantels hat den großen Vorteil, daß der Fortgang der chromatographischen Trennung von z.B. gefärbten Substanzen leicht beobachtet werden kann.

Die Möglichkeit, eine chromatographische Trennung bei bestimmten Temperaturen durchzuführen, ist ein weiterer großer Vorteil des erfindungsgemäßen Systems, da oftmals die Notwendigkeit besteht, Trennungen bei erniedrigten Temperaturen (z.B. bei empfindlichen Substanzen) oder auch bei erhöhten Temperaturen durchzuführen.

Die aufschraubbaren Säulenanschlußteile, die das innenliegende Glasrohr und den außenliegenden Schutz- und/oder Temperiermantel miteinander verbinden und abdichten, bestehen vorzugsweise aus folgenden Einzelteilen.

Die Überwurfmutter (3) wird auf den Schutz- und/oder Temperiermantel aufgeschraubt. Sie enthält eine Rändelmutter (4) mit einem Kolben (5), der das Glasrohr radial abdichtet, und Zu- und Ableitungen (6) für das Laufmittel.

Der Kolben weist stirnseitig eine konisch geformte Dichtlippe (Fig. 3 , 5a) auf.

Diese Dichtlippe liegt am Glasrohr an und dichtet bei Druckbelastung selbsttätig in radialer Richtung ab. Eine zusätzliche Abdichtung erfolgt über O-Ringe (8), die im Kolben (5) angebracht sind. Der Kolben (5) ist so mit einer Kontermutter (9) verbunden (ugl. Fig. 1, unten), daß beim Festschrauben der Kontermutter durch die dazwischenliegende Rändelmutter (4) als drucküberтragendes

Element die O-Ringe (8) in radialer Richtung verformt werden. Dabei wird die hintere Dichtlippe (13) des Kolbens in radialer Richtung an das Glasrohr gepreßt, was zu einer vollständigen, sicheren Abdichtung führt.

Die erfindungsgemäße, am Kolben stirnseitig angebrachte Dichtlippe 5a gewährleistet praktisch eine totvolumenfreie Abdichtung. Die konisch geformte Dichtlippe, die dicht an Glasrohr anliegt, preßt sich bei Druckaufbau im Säulenbett automatisch in radialer Richtung an die Glasinnenfläche.

Der Innendurchmesser des Glasrohres und der Durchmesser des Kolbens sollten daher für eine optimale Abdichtung in etwa übereinstimmen.

Vorzugsweise enthält eines der aufschraubbaren Säulenanschlußteile einen in der Höhe verstellbaren Kolben. Die Rändelmutter (4) enthält dann zusätzlich ein Gewinderohr (7), mit dem die Höhenverstellung des Kolbens bewerkstelligt wird. Diese Ausführungsform ist als oberer Säulenabschluß in Figur 1 und gesondert in Figur 2 dargestellt.

Die Zu- und Ableitungen (6) für das Laufmittel sind durch Stahlrohre mit Gewinden (14) geführt und im Stirnstück des Kolbens mit Hilfe von Plastik-Schneidringen (15) fixiert. Vorzugsweise werden Teflonschläuche eingesetzt.

Die Einzelteile der Säulenanschlußteile bestehen aus für solche Teile üblichen Materialien, vorzugsweise aus inerten Kunststoffmaterialien, beispielsweise aus Polyamiden oder Polyvinylidenfluoriden. Vorzugsweise sind noch weitere Dichtungsringe (16a und b) in der Überwurfmutter (3) vorhanden, um eine optimale Abdichtung zwischen Glasrohr, Schutz- und/oder Temperiermantel und den Säulenanschlußteilen zu erhalten. Die Anschlüsse (17) sind allgemein bekannte Schraubanschlüsse zum Verbinden der Zu- und Ableitungen beispielsweise mit dem Pumpen- oder Detektorsystem.

Die Dichtungen (16a, b und 8) sind vorzugsweise aus inerten Polymeren gefertigt wie auch die Filterplatte (10).

Das mit einer Chromatographie-Packung gefüllte Glasrohr kann nun bei Bedarf leicht und schnell gegen ein Trennrohr mit einem anderen Sorbens ausgetauscht werden. Dieses Kartuschenprinzip ermöglicht eine einfache Handhabung.

Selbstverständlich kann die Trennsäule durch Kopplungsstücke auch beliebig verlängert werden.

Das erfindungsgemäße Chromatographiesäulen-Kartuschensystem ist zudem äußerst druckstabil und kann daher auch für die HPLC eingesetzt werden. Beispielsweise kann ein starkwandiges Glasrohr mit 1 cm Innendurchmesser und 40 cm Länge einen Innendruck von 300-400 bar standhalten.

Eine weitere erfindungsgemäße Ausführungsform ist in Fig. 4 abgebildet. Bei dieser vereinfachten Ausführungsform besitzt der Kolben (5') keinen O-Ring und die Abdichtung erfolgt ausschließlich durch die Dichtlippe (5a). Das Gewinderohr (18) wird durch die Rändelmutter (4) in den Kolben (5') eingeschraubt; dabei ist die Anpassung an unterschiedliche Sorbensbettlängen möglich. Gegebenenfalls kann ein Metallring (19), beispielsweise ein Titanring, vorn den Plastikschneidringen (15) zur verbesserten Fixierung der Zu- und Ableitungen (6) im Stirnstück des Kolbens beitragen. Die restlichen Ziffern in Fig. 4 entsprechen bereits beschriebenen Teilen.

Diese vereinfachte Ausführungsform ist vor allem auch für analytische Zwecke in der HPLC geeignet. Die Glassäulen haben dann Ausmaße, die für die analytische Flüssigkeitschromatographie üblich sind.

Somit können die erfindungsgemäßen Säulensysteme im gesamten Chromatographiebereich eingesetzt werden. Besonders bevorzugt werden diese neuen Chromatographiesäulen-Kartuschensysteme in der Biochromatographie eingesetzt. Die erfindungsgemäßen Chromatographiesäulen-Kartuschensysteme erfüllen die wichtigsten Anforderungen nach Druckstabilität, Transparenz des Säulensystems, Möglichkeit zur Temperierung und nach inerten Materialien, die auf diesem Chromatographiegebiet besonders häufig gestellt werden.

Somit steht ein in der Chromatographie allgemein anwendbares, vorteilhaftes, neues Chromatographiesäulen-Kartuschensystem zur Verfügung.

**Patentansprüche**

1. Chromatographiesäulen-Kartuschensystem mit einem innenliegenden, mit Sorbens füllbaren, druckstabilen Präzisionsglasrohr (1), einem außenliegenden Schutz- und/oder Temperiermantel (2) und Zu- und Ableitungen (6) für das Laufmittel enthaltenden, aufschraubbaren Säulenanschlußteilen, die eine auf den Schutz- und/oder Temperiermantel (2) aufgeschraubte Überwurfmutter (3), eine in letztere eingeschraubte Buchse (4) mit Innen- und Außengewinde und einen das Glasrohr (1) radial abdichtenden mittels eines in das Innengewinde der Buchse (4) eingreifenden Gewinderohres (7; 18) höhenverstellbaren Kolben (5; 5') aufweisen.

2. Chromatographiesäulen - Kartuschensystem nach Anspruch 1, dadurch gekennzeichnet, daß der Kolben (5) zur radialen Abdichtung O-Ringe (8) besitzt und so mit einer Kontermutter (9) verbunden ist, daß beim Festschrauben der Kontermutter (9) durch die zwischenliegende Rändelmutter als druckübertragendes Element (4) die O-Ringe in radialer Richtung verformt werden können.

3. Chromatographiesäulen - Kartuschensystem nach Anspruch 1, dadurch gekennzeichnet, daß der Kolben (5) stirnseitig eine am Glasrohr anliegende, konisch geformte Dichtlippe (5a) besitzt.

**Claims**

1. Chromatography column cartridge system having an internal pressure-stable precision glass tube (1) which can be filled with adsorbent, an external protection and/or temperature-control jacket (2) with column connection parts, containing feed and discharge lines (6) for the mobile phase, which can be screwed on and which possess a union nut (3) which is screwed onto the protection and/or temperature-control jacket (2), a bush (4) which has an internal thread and an external thread and is screwed into the nut (3), and a plunger (5; 5') which seals the glass tube (1) radially and is height-adjustable by means of a threaded tube (7; 18) which engages in the internal thread of the bush (4).

2. Chromatography column cartridge system according to Claim 1, characterised in that the plunger (5) has O-rings (8) for radial sealing and is connected to a lock nut (9) so that when the lock nut (9) is screwed in through the milled nut lying in-between, as the pressure-transferring element (4), the O-rings can be deformed in the radial direction.

3. Chromatography column cartridge system according to Claim 1, characterised in that the plunger (5) has on its front face a conically shaped sealing lip (5a) lying on the glass tube.

**Revendications**

1. Système à cartouches pour colonnes de chromatographie avec un tube de verre de précision (1) résistant à la pression situé à l'intérieur et pouvant être rempli d'un agent d'absorption, une enveloppe extérieure de protection et/ou d'équilibrage de température (2) et des conduites d'adduction et d'évacuation (6) pour la phase mobile,comportant des pièces de raccordement vissables pour la colonne qui présentent un écrou à chapeau (3) vissé sur l'enveloppe de protection et/ou d'équilibrage de température (2), une douille (4) vissée dans celui-ci avec filetage intérieur et extérieur et un piston (5, 5') réglable en hauteur fermant radialement de manière étanche le tube de verre (1) au moyen d'un tube fileté (7, 18) s'engageant dans le filetage intérieur de la douille (4).

2. Système à cartouches pour colonnes de chromatographie selon la revendication 1, caractérisé en ce que le piston (5) possède des joints toriques (8) pour assurer l'étanchéité radiale et est assemblé avec un contre-écrou (9) de façon que le vissage du contre-écrou (9) puisse produire une déformation en direction radiale des joints toriques par l'écrou moleté intermédiaire jouant le rôle d'élément de transmission de pression (4).

3. Système à cartouches pour colonnes de chromatographie selon la revendication 1, caractérisé en ce que le piston (5) possède une lèvre d'étanchéité (5a) de forme conique appuyant frontalement sur le tube de verre.

Fig.1

Fig. 2

Fig. 3

Fig. 4